(19) Europäisches Patentamt
European Patent Office
Office européen des brevets

(11) EP 0 504 429 B1

(12) EUROPEAN PATENT SPECIFICATION

(45) Date of publication and mention
of the grant of the patent:
**12.03.1997 Bulletin 1997/11**

(21) Application number: **91917347.6**

(22) Date of filing: **03.10.1991**

(51) Int Cl.$^6$: **G11B 20/12**, G11B 20/18

(86) International application number:
**PCT/JP91/01333**

(87) International publication number:
**WO 92/06473 (16.04.1992 Gazette 1992/09)**

(54) **DISK RECORDING AND REPRODUCING APPARATUS**

AUFZEICHNUNGS- UND WIEDERGABEGERÄT FÜR PLATTEN

APPAREIL D'ENREGISTREMENT ET DE LECTURE DE DISQUES

(84) Designated Contracting States:
**DE FR GB**

(30) Priority: **05.10.1990 JP 269109/90**
**09.11.1990 JP 305117/90**
**17.05.1991 JP 112980/91**
**13.06.1991 JP 141605/91**

(43) Date of publication of application:
**23.09.1992 Bulletin 1992/39**

(73) Proprietor: **MATSUSHITA ELECTRIC INDUSTRIAL CO., LTD.**
**Kadoma-shi, Osaka-fu, 571 (JP)**

(72) Inventors:
• **TAKI, Hideshi** 19-9, Sugiyamate 3-chome
**Osaka 573-01 (JP)**
• **UENO, Takafumi** 7-5, Kitatomigaoka 6-chome
**Nara 631 (JP)**
• **IZUMI, Tomoaki** 30-4-301, Miiminamimachi
**Osaka 572 (JP)**
• **KASAHARA, Tetsushi**
**2-405, Myokenzaka 6-chome**
**Osaka 576 (JP)**

(74) Representative: **Sorrell, Terence Gordon et al**
**Fitzpatricks,**
**Cardinal Court,**
**23, Thomas More Street**
**London E1 9YY (GB)**

(56) References cited:
**EP-A- 0 418 858**     **EP-A- 0 429 139**
**JP-A-61 156 575**     **JP-A-63 148 422**
**US-A- 4 611 314**     **US-A- 4 875 202**

• **PATENT ABSTRACTS OF JAPAN vol. 11, no. 152 (E-507) (2599) 16 May 1987 & JP-A-61 288 580 (HITACHI) 18 December 1986**

## Description

The present invention relates to a constant linear velocity optical disk recording and reproducing apparatus for recording information such as speech on a disk.

In recent years, compact disks (hereinafter designated "CD") have become remarkably popular, in which an audio signal is converted into a digital form and recorded on a disk.

The bit rate of an audio signal after being digitized is approximately 1.4 Mbps (Megabits per second) for CDs since the sampling frequency (hereinafter designated "Fs") is 44.1 KHz, the quantization bit number (hereinafter designated "Qn") is 16 bits, and the number of channels is two. Also, there are 48 KHz and 32 KHz as the current Fs for DAT (digital audio tape recorder) and BS (Satellite Broadcasting) other than the above-mentioned 44.1 KHz. Also, as for the Qn, although 16-bit linear quantization is mainly used, there has been brought into use or proposed to perform a compression processing such that each sample consists of 4 - 12 bits, to achieve a high accuracy, in contrast with 18 - 24 bits, and so on. Therefore, the bit rates of the above-mentioned respective signals are different from each other. When the above-mentioned digital signals respectively having different Fs and Qn are to be recorded on the one and same medium, the following two kinds of methods have been conventionally employed:

System 1: A method of changing recording and reproducing data rates in accordance with the data rate of an inputted/outputted signal.

System 2: A method of using a fixed data rate of a signal to be recorded and reproduced and adding dummy bits when an inputted/outputted signal has a lower data rate.

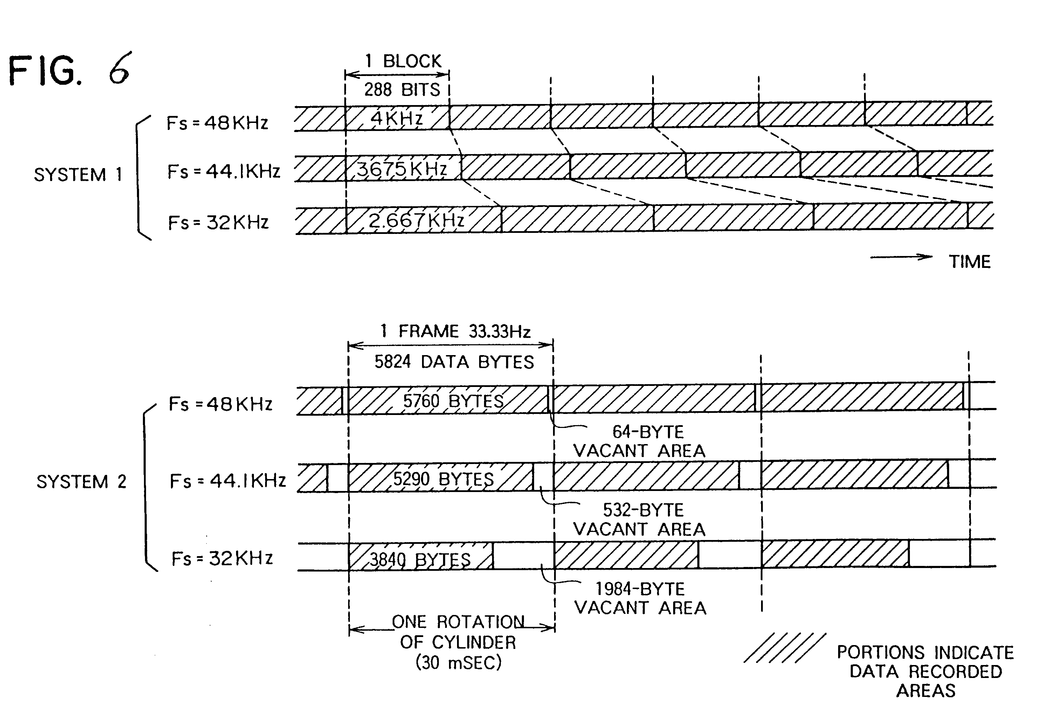

As a prior art example of the system 1, there is a 6.3 mm digital audio tape recorder for business use using a fixed head for the IEC standard: 60A(S)118. Fig. 6 illustrates an outline of a format B thereof. In the system 1 of Fig. 6, one block is comprised of 288 bits including a synchronizing signal and error detecting and correcting codes, irrespective of Fs. One block includes 12 samples of 16-bit quantized PCM samples. When Fs=48 KHz, the block frequency is calculated to be 4 KHz. In this system, a master clock used in the system in accordance with the cases where Fs is 48 KHz, 44.1 KHz and 32 KHz is switched according to the Fs ratio and used. Therefore, when Fs=44.1 KHz, the block frequency is 3.675 KHz, and when Fs=32 KHz, it is 2.667 KHz. A tape speed and recording and reproducing frequencies are also changed in accordance with the Fs rate. Therefore, a recording wavelength on a tape is constant irrespective of Fs. Also, since the tape speed varies with Fs, a maximum recording time at each Fs can usually be obtained, and no vacant data area occurs so that the most favourable condition is usually ensured in terms of the recording density.

As a prior art example of the system 2, there is a DAT cassette system shown in the IEC standard: 60A (S)122 or the standard of Electronic Industries Association of Japan: EIAJ CP-2305, that is, a rotary head type digital audio tape recorder (hereinafter designated R-DAT). Fig. 6 illustrates an outline of a format. In the R-DAT, a data recording capacity is usually constant irrespective of Fs, wherein as Fs is lower vacant data areas are increased. In the system 2 of Fig. 6, the data recording capacity per frame (by one rotation of a cylinder) except for an error correcting code in a PCM data area of R-DAT is 5824 bytes. On the other hand, since the period of one frame is 30 msec, the data amount of a digital audio signal with Fs=48 KHz and Qn=16 bit during this period is 5760 bytes in two channels. Therefore, one frame is recorded on a tape with 64 remaining bytes being vacant (0 data). When Fs=44.1 KHz, inputted data is 5290 bytes so that one frame is recorded with 532 bytes being vacant, and when Fs=32 KHz, inputted data is 2840 bytes so that one frame is recorded with 1984 bytes being vacant. In this case, since the frequency and tape speed for recording ad reproducing are usually constant irrespective of Fs, it is advantageous in facilitating the design of a recording and reproducing system particularly including a tape transporting system.

However, in the abovementioned system 1, since the frequency of a recorded or reproduced signal varies in accordance with Fs and the tape running speed also changes, a wide margin is required for designing a recording and reproducing circuit, a tape driving circuit and so on.

On the other hand, in consideration of using an optical disk as a recording medium, a method of recording a signal on an optical disk is performed using the heat of a laser. It is known that the heat amount imported to the disk is largely affected by the laser power, irradiation time, and the amount the disk moves during the irradiation time, that is, a relative speed (linear velocity) of an optical head with the disk. Thus, for appropriately performing the recording and reproducing with an optical disk, it is necessary to strictly manage the abovementioned conditions including the characteristic of the recording medium itself, in contrast with the magnetic recording. When the abovementioned system 1 is applied to optical disk recording, the linear velocity is naturally varied in accordance with Fs, whereby the management of the recording state becomes extremely complicated. Also, when the data rate largely varies, obstacles may possibly occur, like recording cannot be performed due to the characteristics of the recording medium itself.

As a prior art example of recording a digital signal such as speech on a recording-type optical disk, there is an orange book which is a standard for extensively applying the CD format standard (a red book) to a recording-type disk. However, in the orange book, the frequency of input data is limited exclusively to 44.1 KHz, similarly to the CD, which leads to a system which rotates a disk at a fixed linear velocity corresponding to an input rate to sequentially perform the recording, thus failing to provide a system covering a wide range of input data rates.

On the other hand, in the system 2, as Fs is lower, a vacant area where no information is recorded is increased, thereby producing a lot of redundancy so that it is not a favourable system with respect to the recording capacity. Further, from the fact that the frame frequency is fixed, a fraction of the number of samples may appear in a frame if the number of samples is not an integer multiple of Fs. Therefore, the system 2 has a problem of being incapable of corresponding to arbitrary Fs and Qn.

EP-A-0429139 discloses a constant linear velocity optical disk apparatus for recording input signals, irrespective of the data rate of the input signals, on a disk-shaped recording medium. The apparatus of EP-A-0429139 has a structure generally similar to that of the present invention, but there is no indication of how a state of the memory is monitored. EP-A-0429139 is relevant to the subject matter of the present invention in accordance with Article 54(3)EPC.

It is an object of the present invention to provide a disk recording apparatus which enables recording to be performed at a constant linear velocity and without producing useless vacant areas.

To achieve the above object, the present invention provides a constant linear velocity optical disk apparatus for recording input signals, irrespective of the data rate of the input signals, on a disk-shaped recording medium by use of an optical head, comprising:

memory means for storing digitally encoded input data;

write address generating means for generating a write address of said memory means in accordance with input date stored at an input data rate ;

read address generating means for generating a read address of said memory means in accordance with a given recording instruction at an output data rate ;

operation mode instructing means for detecting the difference between said write address and said read address and selecting between a recording mode for outputting said recording instruction if the value is above a predetermined comparison value and a non-recording mode for inhibiting output of said recording instruction if the value is below said comparison value;

recording signal processing means for recording a signal read out of said memory means on the basis of said read address onto said disk in conformity with said recording instruction; and

tracking control means for placing said optical head on said track during a recording mode and for having said optical head jump back one track after said recording mode has terminated.

The features of the invention will be more readily understood from the following description of a preferred embodiment, with reference to the figures, of which:-

Fig. 1 is a block diagram illustrating the configuration of a disk recording apparatus according to an embodiment of the present invention;

Fig. 2 is a block diagram illustrating the configuration of a recording instruction generating means used in the same embodiment;

Fig. 3 is a diagram of a track pattern recorded by the disk recording apparatus of the same embodiment;

Fig. 4 are waveform charts used for explaining the operation of the disk recording apparatus of the same embodiment;

Fig. 5 is a comparison diagram for comparing transfer amounts between inputted and recorded data in the disk recording apparatus of the same embodiment; and

Fig. 6 are diagrams illustrating conventional formats.

In the following description of the embodiment depicted by the figures, description will be made as to a case where recording is performed on a spiral sequential track formed on a disk from the inner periphery toward the outer peripheral direction.

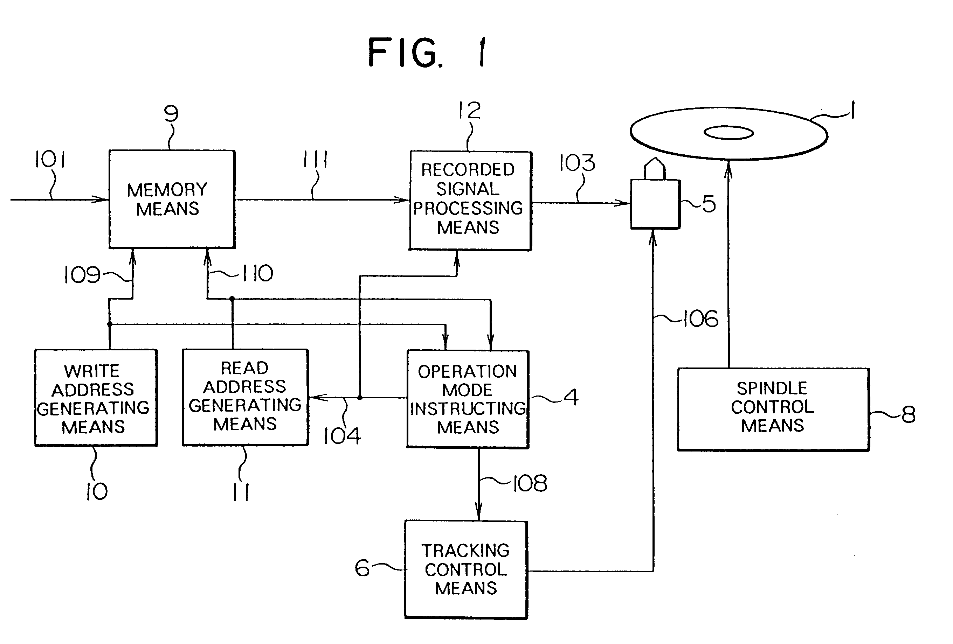

In Fig. 1, input data 101 is written into memory means 9 in accordance with a write address 109 generated by write address generating means 10 at a data rate of the input data, and read out of the memory means 9 in accordance with a read address 110 generated by read address generating means 11 at a recording data rate. The write and read addresses are generated so as to repeatedly circulate the memory. A memory output 111 read out of the memory means 9 is inputted to recorded signal processing means 12, and a laser driving signal 103 for an optical head 5 is outputted by this recorded signal processing means 12, thereby performing recording on an optical disk 1. The recorded signal processing means 12 is such that it combines the functions of a recording signal generating means (not shown) and a recording amplifier (also not shown). Input data 101 is divided into a predetermined number of blocks by the recorded signal generating means and is subjected to a time base compression processing, and addition of a block address, an error correcting code, a synchronising signal and so on, to generate a signal to be recorded, at a timing in accordance with a recording instruction outputted from the operation mode instructing means 4, which is outputted as the laser driving signal 103 by a recording amplifier (not shown).

The tracking control of the optical head 5 is performed by a tracking control output 106 from tracking control means 6.

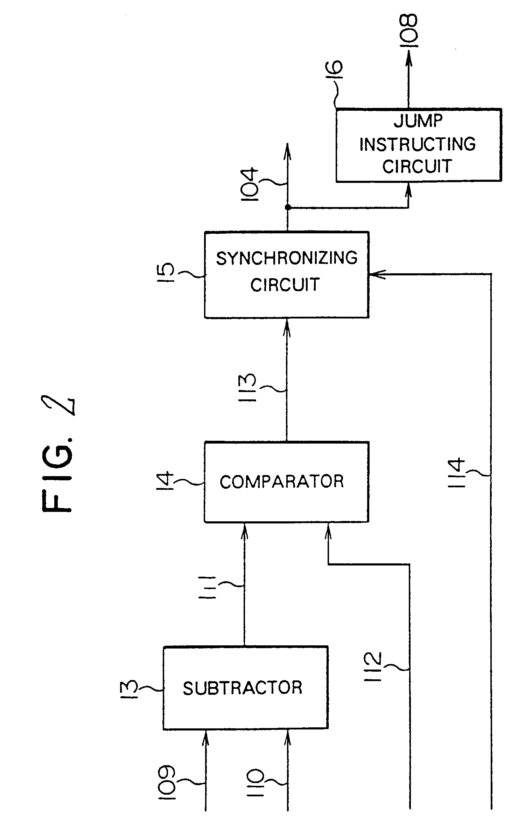

The write address 109 and the read address 110 are both inputted to the operation mode instructing means 4. The operation mode instructing means 4 determines the difference between the write address 109 and the read address 110 to output the recording instruction 104. Fig. 2 illustrates an example of the configuration of the operation mode instructing means 4. In Fig. 2, the write address 109 and the read address 110 are inputted to a subtractor 13 to calculate the difference between them. A subtractor output 111 is compared with a comparison value 112 in a comparator 14. A comparator output 113 is inputted to a synchronizing clock 114 outputted, for example, once per rotation of the disk, and outputted as the recording instruction 104.

In this example, it is assumed that a recording operation is performed at H level and recording prohibition and jump operations are performed at L level. Although in the present embodiment, a fixed value is provided as the comparison value 112, this value may be set from the outside. The setting of the comparison value 112 will be described later.

The write address 109 is generated in accordance with an input data rate, while the read address 110 is generated in accordance with a recording data rate. Further, the recording data rate is set higher than the input data rate such that when writing into and reading out of the memory means 9 are sequentially performed, even if a predetermined input data has been stored in the memory upon starting the recording, the data capacity in the memory is being decreased by the difference in the rate between the input data and the recorded data. Thus, the operation mode instructing means 4 detects from the difference between the read address 109 and the write address 110, as described above, that a remaining data capacity in the memory means 9 is below the comparison value 112, stops the operation of the address read generating means 11 by the recording instruction 104, prohibits data from being read out of the memory means 9, and stops the laser driving signal 103 outputted from the recording signal processing means 12. Meanwhile, the operation mode instructing means 4 detects the final timing of the recording instruction 104 to have a jump instructing circuit 16 generate a track jump instruction 108 and output the same to the tracking control means 6. The tracking control means 6 has the optical head 5 perform a track jump on the basis of the track jump instruction 108. The optical head 5 returns to a track one track before by this track jump. During one rotation of the disk after the track jump, the recording operation is stopped, and data is prohibited from being read out of the memory means 9, so that the data capacity in the memory means 9 is recovered. If the data capacity again exceeds the comparison value 112, new data recording is subsequently resumed. If a recording data rate is significantly higher than an input data rate, it can be thought that one rotation of the disk is not sufficient to recover the data capacity in the memory means 9. In this case, the track jump is again repeated to wait for the recovery of the data capacity in the memory means 9.

Next, description will be made as to the relationship between the setting of the comparison value 112 and the memory capacity.

Basically, as to the memory capacity, it is sufficient that the memory means 9 ensures a data amount of the minimum recording unit which is to be sequentially recorded in the next recording mode, for example, assuming in this example that a one-disk rotation portion is the minimum recording unit, data to be recorded during one rotation of the disk. Therefore, assuming:

Dd: a minimum recorded data amount to be written into the disk 1 in the next recording mode;

Di: an input data amount to be written into the memory means 9 in the next recording mode; and

R: the comparison value 112,
since the input data Di is being written into the memory while data is being recorded on the disk, the comparison value 112 is given by:

$$R = Dd - D1$$

Assuming that Dm represents a current memory capacity, the operation mode is set to the recording mode when $Dm > R = Dd - Di$, and to the track jump when $Dm < R = Dd - Di$.

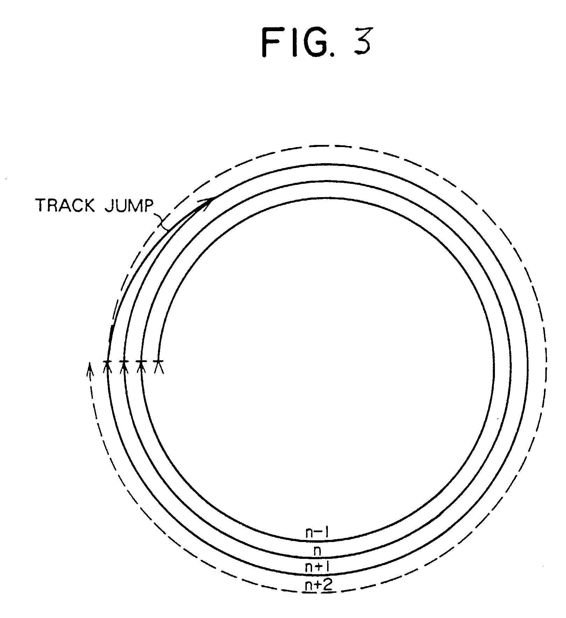

Fig. 3 illustrates a track pattern of this example.

It is assumed in this example that a one disk rotation portion is one track and the minimum sequential recording unit is one track. In fig. 3, a solid line indicates a recorded track, and a broken line an unrecorded track. When the recording instruction 104 becomes L level at the time recording on tracks numbered n-1, n and n+1 have been completed, a track jump (a thick line in Fig. 3) is immediately performed to return to a track one track inside of the current position where the optical head 5 is again placed on the track. At the time the optical head 5 makes a round of the track numbered n+1, the recording instruction again becomes H level to proceed to the recording mode for a track numbered n+2.

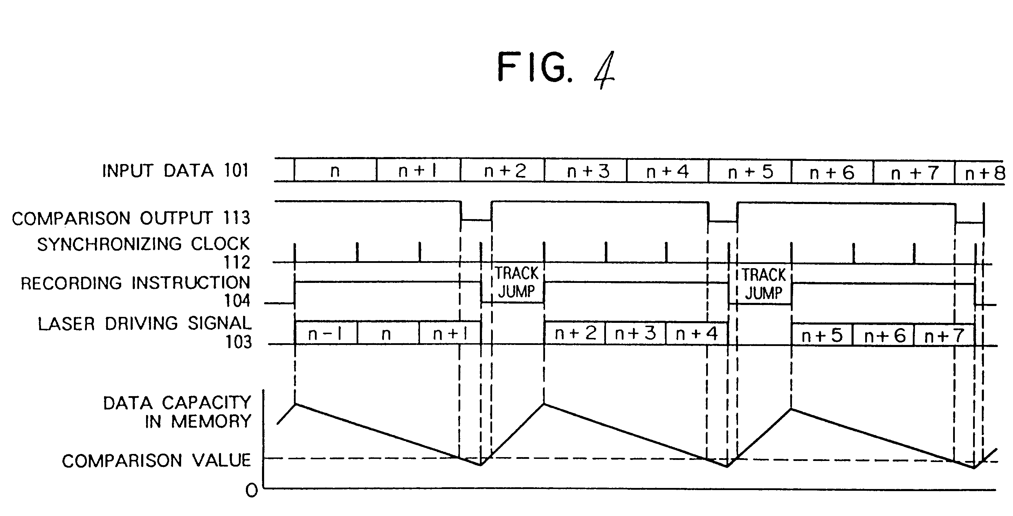

Fig. 4 illustrates waveforms of the present embodiment. In Fig. 4, the output data is sequentially inputted so that division in terms of time does not exist in the data, however, a track number n, n+l, ... are added to every one-disk-rotation (track) portion of data for convenience. The comparator output 113 in the operation mode instructing means 4 varies in accordance with the data capacity in the memory asynchronously with the rotation of the disk. Therefore, in this example, for turning on and off the recording operation in disk rotation units, the comparator output 113 is again read with the synchronizing clock 112 outputted once per rotation of the disk to generate the recording instruction 104. The lowermost column of Fig. 4 illustrates a data amount in the memory means 9. A broken line indicates the comparison value used for the comparison in the comparator 14. In this example, after tracks numbered n+1, n+4 and n+7 have been recorded, the recording instruction 104 becomes L level to proceed to a track jump. After one rotation following the track jump, recording from tracks numbered n+2, n+5 and n+8 is resumed subsequently from the previous recording terminated location.

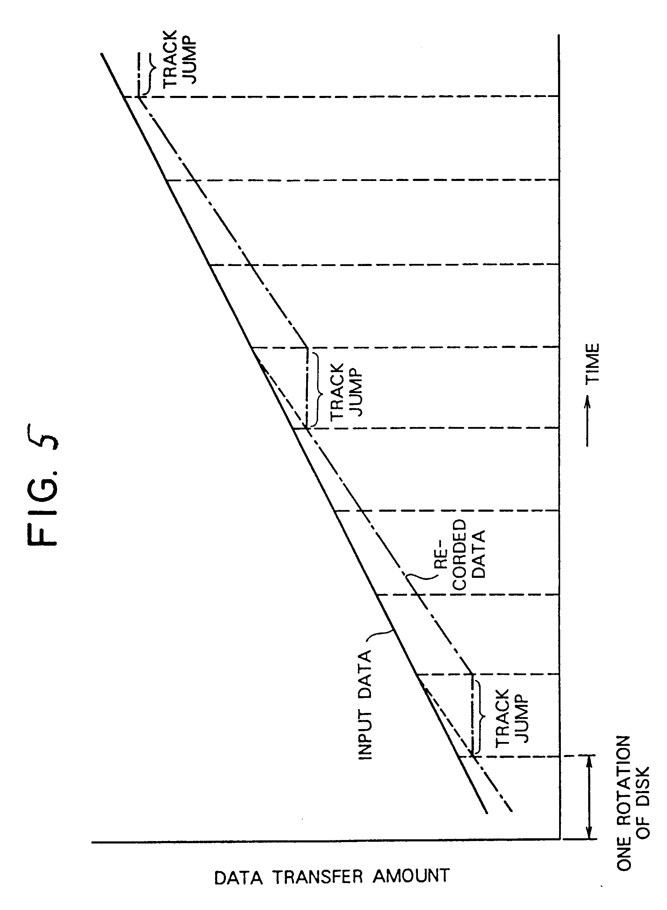

In fig. 5, a solid line indicates a transfer amount of input data, and a one-dot chain line a transfer amount of recorded data of the present embodiment. As is apparent from the foregoing description, the transfer amount of input data linearly increases, whilst the amount of recorded data increases in a stepping manner since it does not increase during a track jump. The difference between the two lines indicates the data capacity in the memory. As is apparent from Fig. 5, a comparison of a data amount in the memory with a comparison value means that a determination is made, for every rotation period, as to whether or not the abovementioned two lines cross during the next period.

Thus, according to the embodiment of the invention, with the above described configuration, data is once taken into a memory, a data capacity in the memory is detected by the difference between a write address and a read address, a recording mode is set if the data capacity in the memory is above a predetermined comparison value while a still mode by a track jump is set if the data capacity in the memory is below the predetermined comparison value, thereby making it possible to record an input signal at any data rate on a disk usually at a constant linear velocity without producing useless vacant area. Whether or not recording is performed is determined only by the data capacity in the memory and the comparison value, so that the ratio of an input data rate to a recording data rate can be arbitrarily set. It is therefore possible to apply not only to a digital audio but also to recording and reproducing of a variety of video information with different data rates according to systems. It is also possible to simplify the recording and reproducing circuit since the recording frequency is usually made constant. Further, high density recording can be usually carried out irrespective of an input data rate. Furthermore, as the recorded signal format is usually the same, it is not necessary, as before, to develop exclusive apparatus according to each input data rate, and a universal apparatus can be realized which can correspond to any data rate.

Incidentally, although in this example, explanation has been given, as an example, of the case where the recording is started and terminated on the basis of the synchronizing pulse generated once per rotation of the disk, the recording operation unit at a time does not necessarily have to be limited to one rotation, and means for detecting addresses recorded on a disk may be provided, to perform new recording subsequently from a previous recording terminated location.

## Claims

1. A constant linear velocity optical disk apparatus for recording input signals, irrespective of the data rate of the input signals, on a disk-shaped recording medium (1) by use of an optical head (5), comprising:

    memory means (9) for storing digitally encoded input data (101);
    write address generating means (10) for generating a write address (109) of said memory means in accordance with input data (101) stored at an input data rate ;
    read address generating means (11) for generating a read address (110) of said memory means (9) in accordance with a given recording instruction (104) at an output data rate ;
    operation mode instructing means (4) for detecting the difference between said write address (109) and said read address (110) and selecting between a recording mode for outputting said recording instruction (104) if the value is above a predetermined comparison value and a non-recording mode for inhibiting output of said recording instruction if the value is below said comparison value;
    recording signal processing means (12) for recording a signal (111) read out of said memory means (9) on the basis of said read address (110) onto said disk in conformity with said recording instruction (104); and
    tracking control means (6) for placing said optical head (5) on said track during a recording mode and for having said optical head (5) jump back one track after said recording mode has terminated.

## Patentansprüche

1. Gerät für optische Platten mit einer konstanten Lineargeschwindigkeit zum Aufzeichnen von Eingabesignalen auf einem plattenförmigen Aufzeichnungsmedium (1) unter Verwendung eines optischen Kopfes (5), von der Datenübertragungsgeschwindigkeit der Eingabesignale, mit:

    einer Speichereinrichtung (9) zum Speichern digital kodierter Eingabedaten (101) ;

    einer Schreibadressenerzeugungseinrichtung (10) zum Erzeugen einer Schreibadresse (109) der Speichereinrichtung gemäß der mit einer Eingabedatenübertragungsgeschwindigkeit abgelegten Eingabedaten (101) ;

    einer Leseadressenerzeugungseinrichtung (11) zum Erzeugen einer Leseadresse (110) der Speichereinrichtung (9) gemäß einer vorgegebenen Aufzeichnungsanweisung (104) mit einer Ausgabedatenübertragungsgeschwindigkeit;

einer Betriebsart-Anweisungseinrichtung (4) zum Erfassen der Differenz zwischen der Leseadresse (109) und der Schreibadresse (110) und zum Wählen zwischen einer Aufzeichnungsbetriebsart, in der die Aufzeichnungsanweisung (104) ausgegeben wird, wenn der Wert oberhalb eines vorgegebenen Vergleichswertes liegt, und einer Nichtaufzeichnungsbetriebsart, in der die Ausgabe der Aufzeichnungsanweisung verhindert wird, wenn der Wert unterhalb des Vergleichswertes liegt;

einer Aufzeichnungssignalverarbeitungseinrichtung (12) zum Aufzeichnen eines auf Grundlage der Leseadresse (110) aus der Speichereinrichtung (9) ausgelesenen Signals (111) auf der Platte in Übereinstimmung mit der Aufzeichnungsanweisung (104) und

einer Spurnachlaufsteuereinrichtung (6) zum Anordnen des optischen Kopfes (5) auf der Spur während einer Aufzeichnungsbetriebsart und zum Veranlassen, daß der optische Kopf (5) eine Spur zurückspringt, wenn die Aufzeichnungsbetriebsart beendet wurde.

## Revendications

1. Appareil à disque optique à vitesse linéaire constante pour enregistrer des signaux d'entrée, indépendamment du débit de données des signaux d'entrée, sur un support d'enregistrement sous forme de disque (1) au moyen de l'utilisation d'une tête optique (5), comprenant :

un moyen de mémorisation (9) pour enregistrer des données d'entrée codées numériquement (101) ;
un moyen de génération d'adresse d'écriture (10) pour générer une adresse d'écriture (109) dudit moyen de mémorisation conformément à des données d'entrée (101) enregistrées selon un débit de données d'entrée ;
un moyen de génération d'adresse de lecture (11) pour générer une adresse de lecture (110) dudit moyen de mémorisation (9) conformément à une instruction d'enregistrement donnée (104) selon un débit de données de sortie ;
un moyen d'instruction de mode de fonctionnement (4) pour détecter la différence entre ladite adresse d'écriture (109) et ladite adresse de lecture (110) et pour effectuer une sélection entre un mode d'enregistrement pour émettre en sortie ladite instruction d'enregistrement (104) si la valeur est supérieure à une valeur de comparaison prédéterminée et un mode de non enregistrement pour inhiber la sortie constituée par ladite instruction d'enregistrement si la valeur est inférieure à ladite valeur de comparaison ;
un moyen de traitement de signal enregistré (12) pour enregistrer sur ledit disque un signal (111) extrait du moyen de mémoire (9) sur la base de ladite adresse de lecture (110), en conformité avec ladite instruction d'enregistrement (104) ; et
un moyen de commande de suivi de piste (6) pour placer ladite tête optique (5) sur ladite piste pendant un mode d'enregistrement et pour que ladite tête optique (5) réalise un saut en reculant d'une piste, après que ledit mode d'enregistrement est terminé.

# FIG. 1

# FIG. 2

# FIG. 3

TRACK JUMP

n−1
n
n+1
n+2

# FIG. 4

INPUT DATA 101

| | n | n + 1 | n + 2 | n + 3 | n + 4 | n + 5 | n + 6 | n + 7 | n + 8 |

COMPARISON OUTPUT 113

SYNCHRONIZING CLOCK 112

RECORDING INSTRUCTION 104

TRACK JUMP TRACK JUMP

LASER DRIVING SIGNAL 103

| n − 1 | n | n + 1 | | n + 2 | n + 3 | n + 4 | | n + 5 | n + 6 | n + 7 |

DATA CAPACITY IN MEMORY

COMPARISON VALUE

O

EP 0 504 429 B1

# FIG. 5

DATA TRANSFER AMOUNT

INPUT DATA

TRACK JUMP

TRACK JUMP

TRACK JUMP

RE-CORDED DATA

ONE ROTATION OF DISK

TIME

# FIG. 6

**SYSTEM 1**

1 BLOCK
288 BITS

Fs = 48KHz — 4KHz

Fs = 44.1KHz — 3.675KHz

Fs = 32KHz — 2.667KHz

→ TIME

**SYSTEM 2**

1 FRAME 33.33Hz
5824 DATA BYTES

Fs = 48KHz — 5760 BYTES — 64-BYTE VACANT AREA

Fs = 44.1KHz — 5290 BYTES — 532-BYTE VACANT AREA

Fs = 32KHz — 3840 BYTES — 1984-BYTE VACANT AREA

ONE ROTATION OF CYLINDER (30 mSEC)

///// PORTIONS INDICATE DATA RECORDED AREAS

EP 0 504 429 B1